Europäisches Patentamt

European Patent Office

Office européen des brevets

(19)

(11) Veröffentlichungsnummer: **0 225 291 B1**

## (12) EUROPÄISCHE PATENTSCHRIFT

(45) Veröffentlichungstag der Patentschrift: **22.01.92**

(21) Anmeldenummer: **86810549.5**

(22) Anmeldetag: **01.12.86**

(51) Int. Cl.⁵: **A01K 1/01**, B65G 33/08

(54) **Dungräumeinrichtung für Ställe.**

(30) Priorität: **03.12.85 CH 5143/85**

(43) Veröffentlichungstag der Anmeldung:
**10.06.87 Patentblatt 87/24**

(45) Bekanntmachung des Hinweises auf die
Patenterteilung:
**22.01.92 Patentblatt 92/04**

(84) Benannte Vertragsstaaten:
**AT BE CH DE ES FR GB IT LI NL SE**

(56) Entgegenhaltungen:
DE-A- 876 614          DE-A- 2 655 302
DE-C- 365 965          DE-C- 674 276
FR-A- 2 273 470        GB-A- 1 152 122
GB-A- 1 426 181        US-A- 2 489 592
US-A- 2 672 970

(73) Patentinhaber: **Krebs, Arthur**
**Rennweg**
**CH-8633 Wolfhausen(CH)**

(72) Erfinder: **Krebs, Arthur**
**Rennweg**
**CH-8633 Wolfhausen(CH)**

(74) Vertreter: **Bosshard, Ernst**
**Schulhausstrasse 12**
**CH-8002 Zürich(CH)**

## Beschreibung

Die Erfindung betrifft eine Dungräumeinrichtung für Ställe zur mechanischen Entmistung einer oben offenen, durch einen Rost überdeckten Kotschale, in welcher sich, um den Dung in eine Grube zu befördern, eine motorisch angetriebene Förderschnecke befindet, und dass die Förderschnecke nur beim Antrieb einseitig gelagert ist.

Ferner bezieht sich die Erfindung auf ein Verfahren zum Betrieb der Dungräumeinrichtung.

Bekannte Vorrichtungen zur Stall-Entmistung verwenden Seilwinden oder Ketten mit Schrappern oder Schubstangen mit beweglichen Mitnehmern. Diese Konstruktionen verlangen eine aufwendige Mechanik und sind verschleissanfällig. Drehende Teile wurden bisher weitgehend vermieden, da Stroh und Grasreste die Tendenz haben sich aufzuwickeln und dadurch Verstopfungen verursachen und Fremdkörper wie Steine oder Holzreste zu Beschädigungen von drehenden Teilen führen können. Des weiteren ist es bekannt, den Dung durch Schwemmspülung in Dunggruben zu leiten. Eine starke Verflüssigung des Dunges ist unerwünscht und bedingt zudem grosse Jauchegruben.

Aus der FR-A-2 273 470 ist eine Dungräumeinrichtung mit einer motorisch angetriebenen Förderschnecke bekannt, die in einer V-förmigen Rinne angeordnet und entlang der Rinne durch Lager abgestützt ist. Nachteilig ist dabei, dass die starre Förderschnecke bei Fremdkörpern nicht ausweichen kann und die Brückenbildung bei verdicktem oder mit Halmgut durchsetzem Dung nicht verhindert werden kann.

Die GB-A-1 426 181 zeigt eine Transportschnecke mit einem Gelenk, sodass das Transportgut auch in Aufwärtsrichtung gefördert werden kann. Im geradlinigen Teil ist die nicht flexible Förderschnecke durch Lager abgestützt.

Es ist aus der DE-C 674 276 bereits eine Förderschnecke bekannt, die aus einer Schraubenfeder gebildet wird und lose auf dem Grund einer oben offenen Mulde von grösserem Querschnitt als dem der Förderschnecke aufliegt. Diese Fördereinrichtung ist vorzugsweise für den Bergbau vorgesehen. Nachteilig ist die Abnützung sowohl der Mulde als auch der Förderschnecke, da diese Teile direkt gegeneinander anliegen und der dadurch bedingte hohe Kraftbedarf.

Mit der Erfindung soll die Aufgabe gelöst werden, eine Dungräumeinrichtung zu schaffen, mit welcher der anfallende, dickflüssige Dung durch eine Förderschnecke in eine Dunggrube gefördert werden kann, ohne dass Brückenbildung auftritt oder Störungen durch Fremdkörper entstehen und unter weitgehender Vermeidung einer Abnützung der relativ zueinander beweglichen Teile. Ausserdem soll sich die Einrichtung auch nachträglich in bestehende Kotschalen einbauen lassen.

Diese Aufgabe wird dadurch gelöst, dass die Förderschnecke flexibel ausgebildet ist, ihr Durchmesser gegenüber der Kotschale einen seitlichen Bewegungsspielraum von mindestens 1/3 des Förderschnecken-Durchmessers erlaubt und auf der Förderschnecke im Abstand voneinander Abstandhalter sitzen, welche einen gegenüber der Förderschnecke leicht grösseren Durchmesser haben, die Abstandhalter auf dem Kotrinnenboden aufliegen und die Förderschnecke relativ zu diesen Abstandhaltern drehbar ist.

Auf diese Weise ist es möglich, mit einer im Durchmesser relativ kleinen und deshalb besonders flexiblen Förderschnecke auszukommen und trotzdem den in der Kotschale anfallenden Dung zuverlässig in eine Dunggrube zu fördern, ohne dass Verstopfungs- oder Blockierungsgefahr besteht, da die Förderschnecke beim Auftreffen auf allfällige harte Fremdkörper, wie Steine, Holzstücke od.dgl. infolge ihres Bewegungsspielraumes quer zur Förderrichtung ausweichen kann und durch ihre pendelnde Bewegung einer Brückenbildung entgegenwirkt.

Das erfindungsgemässe Verfahren zum Betrieb einer solchen Dungräumungseinrichtung besteht darin, dass der Dung durch die Förderschnecke ohne oder weitgehend ohne Wasserzugabe in die Dunggrube befördert wird und die Förderschnecke zur Ausräumung der Kotschale und zur Vermeidung von Brückenbildung vor- und rückwärtslaufend ausgebildet wird, wobei der Vorwärtslauf wesentlich länger als der Rückwärtslauf gewählt wird.

Gegenüber Schwemmentmistung kann infolge Wegfall des Spülwassers die Grube eine wesentlich grössere Menge an Dung aufnehmen, wodurch sie seltener entleert werden muss. Auch können Baukosten bei Gruben erspart werden, da der Volumenanteil des Spülwassers von etwa 50 - 70 % wegfällt.

Der dickflüssige Dung fördert die Bildung einer Humusschicht auf dem Boden und die Geruchsemission wird eingeschränkt. Da der flüssige Anteil des Dunges gering ist, wird die Gefahr einer Grundwasser-Verschmutzung vermindert.

Anhand der Zeichnungen werden Ausführungsbeispiele einer solchen Dungräumeinrichtung näher erläutert. Es zeigen:

Fig. 1 einen Querschnitt durch eine V-förmige Kotschale mit Förderschnecke

Fig. 2 einen Querschnitt durch eine U-förmige Kotschale mit Förderschnecke

Fig. 3 einen Vertikalschnitt durch einen Stall mit Förderschnecke und Kotschale

Fig. 4 einen Vertikalschnitt durch eine Grube mit Förderschnecke und Antriebsorganen

Fig. 5 einen Vertikalschnitt durch eine Kotschale mit Förderschnecke und Abstandhalter

Fig. 6 einen Schnitt durch ein Pendelgelenk der Förderschnecke

Fig. 7 eine Ansicht der Befestigungseinrichtung für die Motor-Getriebeeinheit mit Sockelplatte

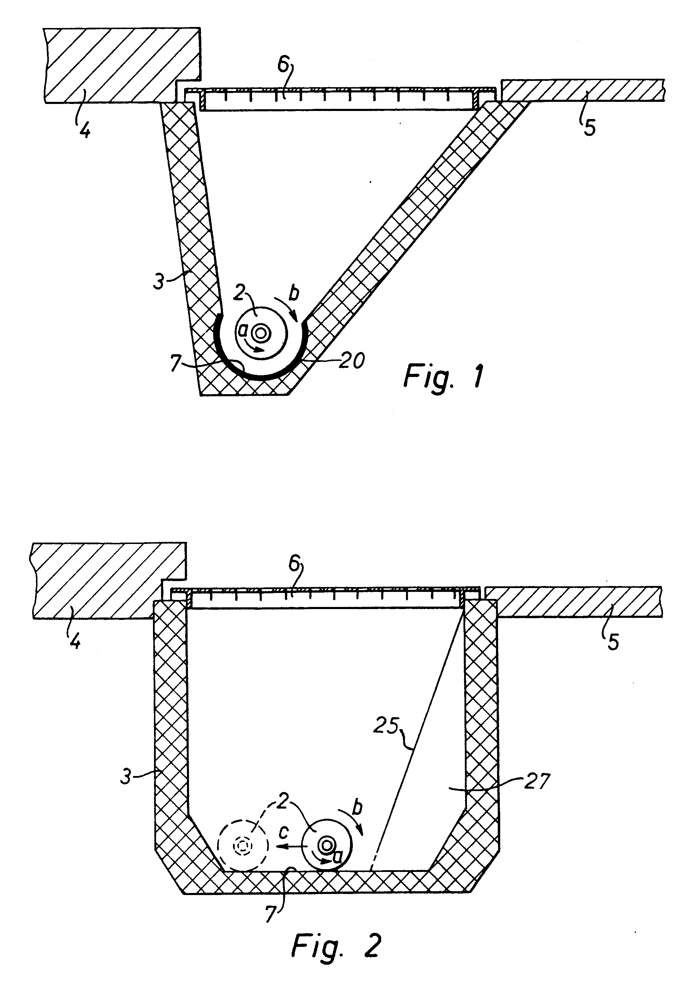

Die Dungräumeinrichtung gemäss Fig. 1 enthält eine im Querschnitt V-förmige Kotschale 3, in der sich eine Förderschnecke 2 befindet. Diese Förderschnecke 2 verläuft in Längsrichtung der üblicherweise aus Betonelementen bestehenden Kotschale 3. Ein Radius am Boden 7 der Kotschale 3 ist genügend gross, um der Förderschnecke 2 Querbewegungen bezüglich der Kotschale 3 zu ermöglichen. Die Förderschnecke 2 besteht aus einem flexiblen Material, vorzugsweise rostfreiem Metall. Da die Förderschnecke 2 nur am antriebsseitigen Ende gelagert ist, kann sie infolge ihrer Flexibilität und ihres seitlichen Bewegungsspielraumes in der Kotschale 3 eine schlingernde oder schlenkernde Bewegung ausführen, wobei die seitliche Auslenkung durch die Wölbung der Kotschale 3 begrenzt wird. Damit diese Schlinger- oder Schlenkerbewegung keine Abnutzung der Kotschale 3 und der Förderschnecke 2 verursacht, besteht die Berührungsfläche der Kotschale aus einer gegenüber Beton gleitfähigeren und abriebfesteren Schicht 20, z.B. Kunststoff.

Diese Schlinger- oder Schlenkerbewegung bewirkt ein Ausräumen der Kotschale 3 in ihrer ganzen Breite. Der seitliche Bewegungsspielraum der Förderschnecke 2 beträgt mindestens 1/3, vorzugsweise etwa 1/2 des Förderschnecken-Durchmessers. Dieses seitliche Spiel zwischen Förderschnecke 2 und der Kotschale 3 ermöglicht der flexiblen Förderschnecke 2 ein Ausweichen bei harten Gegenständen wie Steine, Holzstücke od.dgl., welche die Fördereinrichtung sonst behindern, blockieren oder beschädigen könnten. Der Antrieb wird vorzugsweise so ausgebildet, dass er in beiden Drehrichtungen laufen kann.

In Fig. 2 ist eine Ausführungsvariante dargestellt, bei welcher die Kotschale 3 im Querschnitt eine U-förmige Gestalt hat. Gegenüber dem Lager 4 für die Tiere und dem Stallgang 5 ist die Kotschale 3 vertieft angeordnet und oben durch einen Rost 6, vorzugsweise einen Gitterrost überdeckt. Die Förderschnecke 2 befindet sich am flachen Grund der Kotschale 3 und liegt bei der Vorwärtsdrehung, also in Richtung des Pfeiles b, etwa in der Mitte des Bodens 7. Bei einer Rückwärtsdrehung der Förderschnecke 2, also in Richtung des Pfeiles a, bewegt sie sich infolge ihrer Flexibilität entlang des Bodens 7 in Richtung des Pfeiles c, wie dies in Fig. 2 in unterbrochenen Linien dargestellt ist. Infolge dieser sich selbsttätig einstellenden Querbewegung der Förderschnecke 2 mindestens über etwa 1/3 der Kotschalen-Breite, vorzugsweise über etwa die halbe Breite des Bodens 7 wird verhindert, dass in der Kotschale 3 eine Brücke oder kompakte Schwimmdecke durch den Dung auftritt oder sich tote Räume bilden können.

Die Kotschale 3 wird vorzugsweise durch ein gelochtes, schräges Blech 25 in eine Kammer 27 zur Aufnahme von Harn unterteilt.

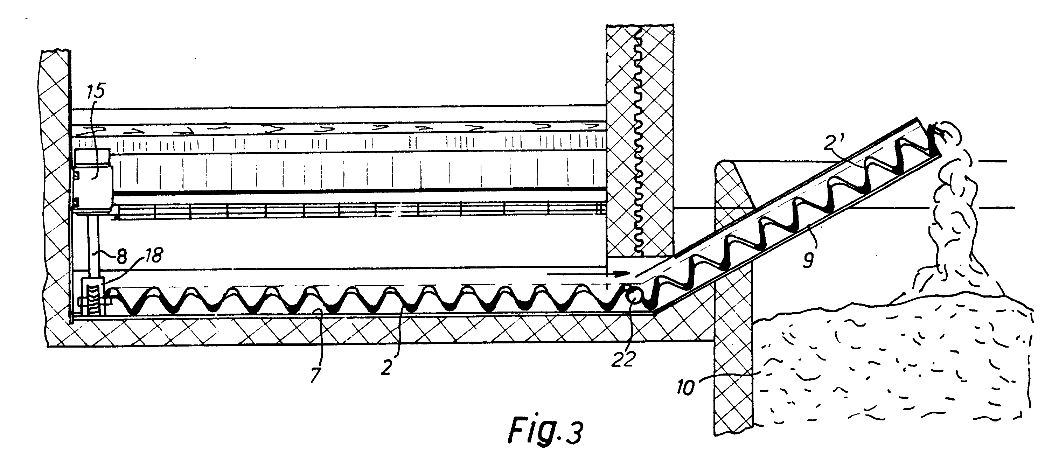

Gemäss Fig. 3 befindet sich im Bereich ausserhalb des Stalles ein geneigt angeordnetes, heizbares Förderrohr 9 mit verstellbarer Seiten- und Höheneinstellung. Die Dunggrube 10 ist hier in offener Art vorgesehen. Die Beheizung des Förderrohres 9 erfolgt bei kalter Witterung vorzugsweise durch um den Mantel herum angeordnete elektrische Heizelemente oder durch Gasbeheizung. Ein durch ein Gelenk 22 antriebsverbundenes Teilstück 2' der Förderschnecke ragt in das Förderrohr 9 hinein. Der Antrieb der Förderschnecke 2 erfolgt über einen Antriebsmotor 15, und eine Verbindungsstange 8 auf ein Untersetzungsgetriebe 18, vorzugsweise ein Schneckengetriebe. Es ist indessen auch möglich, das Teilstück 2' der Förderschnecke durch einen separaten Antrieb, beispielsweise von der Zapfwelle eines Traktors anzutreiben.

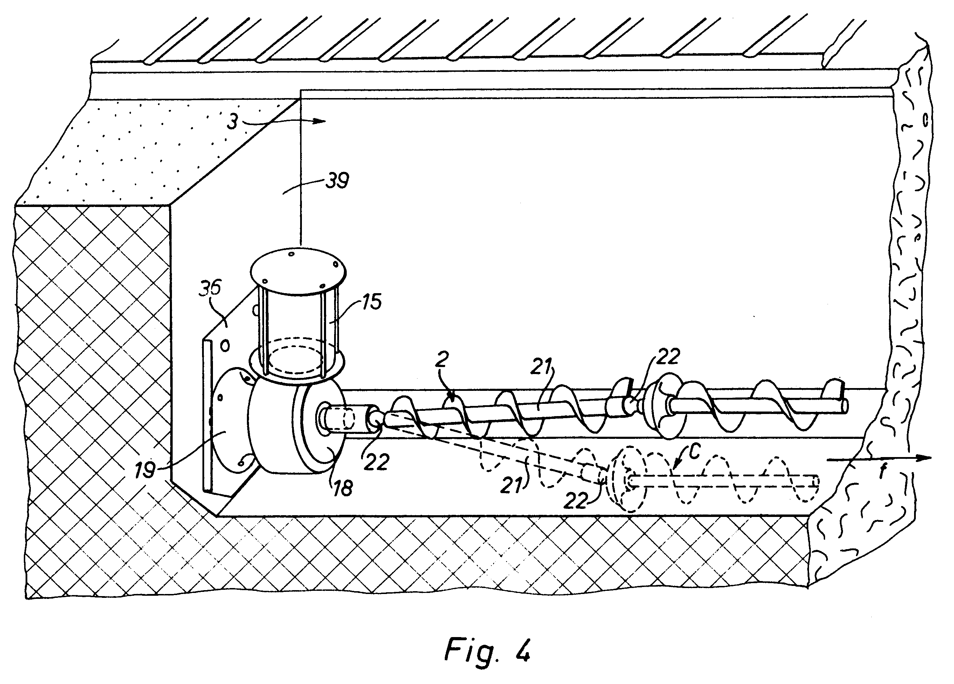

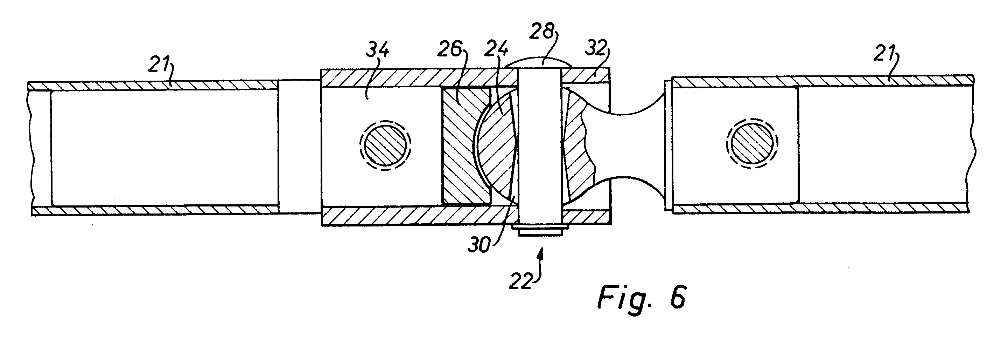

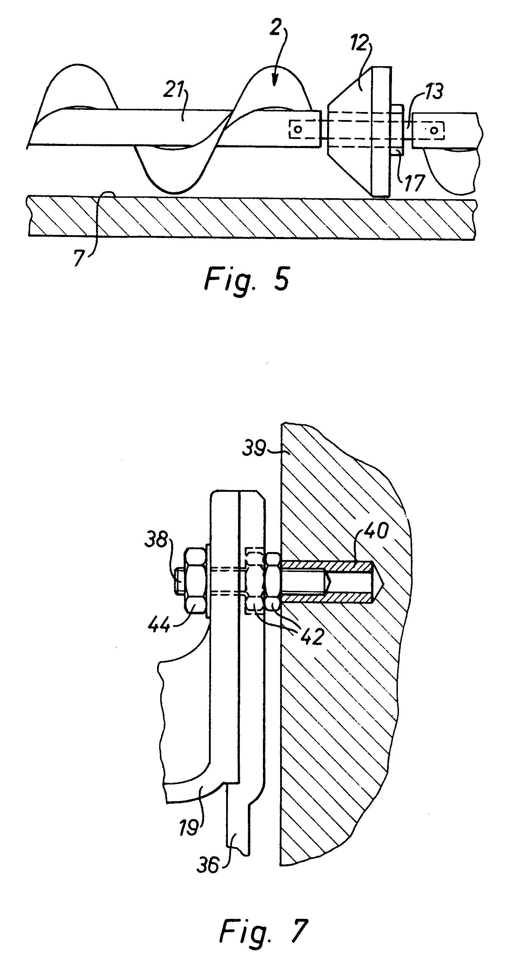

Zur Vermeidung von Abnützungen sowohl an der Förderschnecke 2 als auch an der Kotschale 3 sind gemäss Fig. 4 und 5 auf die Förderschnecke 2 Abstandhalter 12 aufgesetzt. Diese Abstandhalter 12 sind in axialen Abständen entlang der Förderschnecke 2 angeordnet. Die Abstandhalter 12 haben vorzugsweise eine - allenfalls hohle - Schalen-, Kegelstumpf-, Halbkugel- oder Kugelform, wobei die Wölbung der Antriebsseite zugekehrt ist. Diese Formen ermöglichen, dass auch Fasermaterial od.dgl. zusammen mit dem Dung in Förderrichtung transportiert wird. Der Aussendurchmesser der Abstandhalter 12 ist etwas grösser als die Durchmesser der Förderschnecke 2. Solche Abstandhalter 12 können sowohl bei der Ausführungsform nach Fig. 1 als auch Fig. 2 eingesetzt werden. Die Verbindung der Abstandhalter 12 mit der Förderschnecke 2 erfolgt gemäss Fig. 5 in der Weise, dass die Abstandhalter 12 je mit einer eingepressten Lagerbüchse 17 versehen sind, die in der Mitte je von einem Dorn 13 durchdrungen wird. Dieser greift je in Bohrungen der Förderschnecken-Teilstücke ein und ist mit diesen starr verbunden. Der Dorn 13 ist somit relativ zum stillstehenden Abstandhalter 12 drehbar. Die auf dem Boden 7 zum Anliegen kommenden Abstandhalter bewirken, dass zwischen Förderschnecke 2 und Kotschale praktisch keine Abnützung entsteht. Die Abstandhalter 12 bestehen aus nichtrostendem Metall, Kunststoff oder Holz. Bei im Querschnitt U-förmigen Kotschalen 3 ist es zweckmässig, in der Nähe des Antriebes mindestens ein, vorzugsweise zwei Pendelgelenke 22 in der Förderschnecke vorzusehen. Diese erlauben eine grössere seitliche Auslenkung der einseitig gelagerten, flexiblen Förderschnecke 2. Die Windungen der Förderschnecke sind hier auf einer Stange 21 oder einem Rohr befestigt. Bei einem Drehrichtungswechsel - also entgegengesetzt zur normalen Förderrichtung gemäss Pfeil f - schwenkt die Förderschnecke 2 selbsttätig in Richtung des Pfeiles c aus und nimmt die in Fig. 4 in unterbrochenen Linien dargestellte Lage ein.

Der Antriebsmotor 15 und das Getriebe 18 sind zusammengebaut und werden in der Grube unterflur befestigt. Der Motor 15 und das Getriebe 18 sind flüssigkeitsdicht gekapselt.

Aus Fig. 6 geht die Ausbildung des Pendelgelenkes 22 der Förderschnecke 2 hervor. Dieses Pendelgelenk 22 ist zur Uebertragung von Dreh- und Axialkräften ausgebildet und enthält einen Kugelzapfen 24, der in einer Pfanne 26 gelagert ist. Der Kugelzapfen 24 wird von einem zylindrischen Bolzen 28 durchdrungen, wobei die entsprechende diametrale Oeffnung 30 im Kugelzapfen 24 - im Querschnitt - in der Mitte kreisförmig und aussen beidseitig oval ausgebildet ist. Der Bolzen 28 ist beidseitig in einer Hülse 32 gehalten, welche mit einem Verbindungszapfen 34 drehfest verbunden ist. Somit können die Förderschnecken während ihrer Drehbewegung zueinander einen Winkel einnehmen. Diese Ausbildung des Pendelgelenkes 22 hat praktisch keine vorstehenden Teile an welchen sich Halmgut aufwickeln könnte.

Die Befestigung des Getriebes 15 an der Vertikalmauer 39 unterflur erfolgt mit Hilfe einer Sockelplatte 36 (Fig. 7) und mehreren Schraubenbolzen 38. Die Schraubenbolzen 38 werden je in einen Mauerdübel 40 eingeschraubt und durch zwei Kontermuttern 42 festgespannt. Dadurch lässt sich hernach der Getriebesockel 19 auf die vorstehenden Schraubenbolzen 38 aufsetzen und durch Muttern 44 festziehen. Auf diese Weise können allfällige Unebenheiten in der Mauer ausgeglichen werden und die Befestigung sowie das Lösen des Motor-Getriebeaggregates kann auf besonders einfache Weise erfolgen.

Der Betrieb dieser Dungräumeinrichtung erfolgt in der Weise, dass die Förderschnecke 2 während eines gewissen Zeitintervalles - beispielsweise 1 - 4 Minuten - in Vorwärts-Drehrichtung gedreht wird. Hernach erfolgt durch eine automatische Steuerung ein Drehrichtungswechsel, indem die Förderschnecke 2 während eines wesentlich kürzeren Zeitintervalles - beispielsweise 10 - 20 Sekunden - in der Gegenrichtung gedreht wird. Bei der Rückwärtsdrehung bewegt sich die Förderschnecke 2 in Richtung des Pfeiles c am Boden 7 quer zur Längsrichtung der Förderschnecke 2 und bewirkt dadurch zusammen mit der Schlinger- oder Schlenkerbewegung einen Abtransport des sich in der Kotschale 3 befindlichen Dung-Materials auf einer Breite die wesentlich grösser ist als dem Förderschnecken-Aussendurchmesser entspricht. Allfällig aufgewickeltes Halmgut löst sich im Verlauf der Rückwärtsdrehung. Bei allfälligen Hindernissen wie Steine, Holz od.dgl. springt die Förderschnecke infolge ihrer Flexibilität bzw. Gelenkigkeit über diese hinweg. Dem Dung wird - ausser bei einer periodischen Reinigung - kein Wasser zugesetzt. Die Dunggrube 10 befindet sich üblicherweise auf einem tiefern Niveau als die Förderschnecke 2, wodurch auf ein Förderrohr gemäss Fig. 3 verzichtet werden kann.

Die Masse braucht beim Ausbringen auf das Feld nicht verdünnt zu werden, sondern kann auch auf steilen Wiesen dickflüssig ausgebracht werden.

**Patentansprüche**

1. Dungräumeinrichtung für Ställe zur mechanischen Entmistung einer oben offenen, durch einen Rost (6) überdeckten Kotschale (3), in welcher sich, um den Dung in eine Grube zu befördern, eine motorisch angetriebene Förderschnecke (2) befindet, dadurch gekennzeichnet dass die Förderschnecke (2) nur beim Antrieb einseitig gelagert und flexibel ausgebildet ist, ihr Durchmesser gegenüber der Kotschale (3) einen seitlichen Bewegungsspielraum von mindestens 1/3 des Förderschnecken-Durchmessers erlaubt und auf der Förderschnecke (2) im Abstand voneinander Abstandhalter (12) sitzen, welche einen gegenüber der Förderschnecke (2) leicht grösseren Durchmesser haben, die Abstandhalter (12) auf dem Kotrinnenboden (7) aufliegen und die Förderschnecke (2) relativ zu diesen Abstandhaltern (12) drehbar ist.

2. Dungräumeinrichtung nach Anspruch 1, dadurch gekennzeichnet, dass der Antriebsmotor (15) und das mit diesem zusammengebaute Getriebe (18) flüssigkeitsdicht ausgebildet und in der Grube (10) angeordnet sind, und die Motor-Getriebeeinheit an einer vertikalen Sockelplatte (36) befestigt ist, die durch in die Grubenmauer (39) eingelassene Schraubenbolzen (38) starr gehalten ist.

3. Verfahren zum Betrieb der Dungräumeinrichtung nach Anspruch 1, dadurch gekennzeichnet, dass der Dung durch die Förderschnecke ohne oder weitgehend ohne Wasserzugabe in die Dunggrube (10) befördert wird und die Förderschnecke (2) zur Ausräumung der Kotschale (3) und zur Vermeidung von Brückenbildung vor- und rückwärtslaufend ausgebildet wird, wobei der Vorwärtslauf wesentlich länger als der Rückwärtslauf gewählt wird.

## Claims

1. Manure clearing apparatus for stalls for mechanical removal of manure from a manure pan (3) open at the top and covered by a grating (6) and in which a motor-driven conveyor screw (2) is located in order to transport the manure into a pit, characterized in that the conveyor screw (2) is mounted only on one side when being driven, and is of flexible construction, its diameter relative to the manure pan (3) permits a lateral free motion of at least 1/3 of the conveyor screw diameter, and spacers (12) are seated on the conveyor screw (2) at intervals from each other and have a slightly greater diameter than the conveyor screw (2), the spacers (12) rest on the floor (7) of the manure gutter, and the conveyor screw (2) is rotatable relative to these spacers (12).

2. Manure clearing apparatus according to Claim 1, characterized in that the drive motor (15) and the gear (18) assembled together with this are of liquid-tight construction and are arranged in the pit (10), and the motor-gear unit is attached to a vertical base plate (36) which is rigidly held by screw bolts (38) let into the pit wall (39).

3. Process for the operation of the manure clearing apparatus according to Claim 1, characterized in that the manure is conveyed by the conveyor screw into the dung pit (10) without, or substantially without, addition of water, and the conveyor screw (2) is constructed to run both forward and backward for clearing out the manure pan (3) and to prevent bridging, wherein the forward run is selected to be substantially longer than the backward run.

## Revendications

1. Installation pour enlever le fumier des étables en vue de la vidange mécanique d'une cuvette à matières fécales (3), ouverte à la partie supérieure, recouverte d'une grille (6), dans laquelle est installée une vis sans fin de transport (2), entrainée par un moteur, pour évacuer le fumier vers une fosse, caractérisée en ce que la vis sans fin de transport (2) est montée unilatéralement sur palier, uniquement du côté commande et qu'elle est de structure flexible, que son diamètre par rapport à la cuvette à matières fécales (3) permet un jeu latéral de mouvement d'au moins le tiers du diamètre de la vis sans fin de transport, que des entretoises (12) d'un diamètre légèrement supérieur à celui de la vis sans fin de transport (2) sont disposées avec un espacement les unes des autres sur la vis sans fin de transport (2), les entretoises (12) reposant sur le fond de la rigole à matières fécales (7) et la vis sans fin de transport (2) pouvant tourner par rapport à ces entretoises (12).

2. Installation pour enlever le fumier des étables selon la revendication 1, caractérisée en ce que le moteur de commande (15) et le réducteur (18) incorporé à ce dernier sont étanches aux liquides et sont installés dans la fosse (10) et que le groupe moto-réducteur est fixé sur une semelle verticale formant socle (36), qui est maintenue rigidement par des boulons (38) scellés dans le mur de la fosse (39).

3. Procédé d'utilisation d'une installation d'enlèvement de fumier selon la revendication 1, caractérisé en ce que le fumier, sans addition d'eau ou presque, est acheminé par la vis sans fin de transport vers la fosse à fumier (10) et que la vis sans fin de transport (2) est agencée pour tourner en marche avant et en marche arrière pour vidanger la cuvette à matières fécales et pour éviter la formation de voûtes, la marche avant étant sélectionnée pendant un temps sensiblement plus long que celui de la marche arrière.

Fig. 1

Fig. 2

Fig.3

EP 0 225 291 B1

Fig. 4

Fig. 6

EP 0 225 291 B1

Fig. 5

Fig. 7